# EUROPÄISCHE PATENTSCHRIFT

(11) **EP 3 877 203 B1**
(45) Veröffentlichungstag und Bekanntmachung des Hinweises auf die Patenterteilung: **01.03.2023**
(21) Anmeldenummer: 19794088.5
(22) Anmeldetag: 08.10.2019
(51) Int. Cl.: B60K 6/387, B60K 6/405, B60K 6/48

(54) **GETRIEBEEINHEIT MIT EINER GETRIEBESEITIGEN TRENNWAND**
TRANSMISSION UNIT WITH A TRANSMISSION-SIDE BULKHEAD
UNITÉ DE TRANSMISSION COMPRENANT UNE PAROI DE SÉPARATION CÔTÉ TRANSMISSION

(30) Priorität: 05.11.2018 DE 102018127511; 14.02.2019 DE 102019103771
(43) Veröffentlichungstag der Anmeldung: 15.09.2021
(73) Patentinhaber: Schaeffler Technologies AG & Co. KG, 91074 Herzogenaurach (DE)
(72) Erfinder: MACMILLIAN, Loyal George, 76133 Karlsruhe (DE); MACKOWIAK, Stefan, 76316 Malsch (DE)
(86) Internationale Anmeldenummer: PCT/DE2019/100869
(87) Internationale Veröffentlichungsnummer: WO 2020/094177

(56) Entgegenhaltungen:
- EP-A1- 2 287 487
- EP-A1- 2 573 910
- DE-A1-102007 060 165
- DE-A1-102012 022 290

## Beschreibung

Die Erfindung betrifft eine Getriebeeinheit nach dem Oberbegriff von Anspruch 1.

Ein Hybridmodul ist beispielsweise aus DE 10 2009 059 944 A1 bekannt. Darin wird ein Hybridmodul für einen Antriebstrang eines Fahrzeuges, mit einer ersten Trennkupplung, einem Elektromotor und einer zweiten Trennkupplung gezeigt, wobei die erste Trennkupplung im Momentenfluß zwischen einem Verbrennungsmotor im Antriebstrang und dem Elektromotor und die zweite Trennkupplung im Momentenfluß zwischen Elektromotor und einem Getriebe im Antriebstrang angeordnet sind, wobei die erste Trennkupplung und die zweite Trennkupplung in einem gemeinsamen Nassraum angeordnet sind. Das Hybridmodul ist getriebeseitig durch eine einteilig mit dem Getriebegehäuse ausgeführte Wandung begrenzt.

Ein weiteres Hybridmodul ist beispielsweise aus der EP 2 287 487 A1 bekannt.

Aus der DE 10 2012 022 290 A1 ist ein Hybridmodul mit einer Trennkupplung zwischen dem Verbrennungsmotor und dem Elektromotor bekannt, bei welchem eine Zwischenwand zwischen Hybridmodul und Getriebe mit einem Gehäuse trennbar verbunden ist.

Die Aufgabe der vorliegenden Erfindung besteht darin, eine Getriebeeinheit mit einem Hybridmodul zu verbessern. Die Getriebeeinheit soll einfacher und kostengünstiger aufgebaut und angeordnet werden können.

Zur Lösung wenigstens einer der zuvor angegebenen Aufgaben wird eine Getriebeeinheit in einem Antriebsstrang eines Fahrzeugs nach Anspruch 1 vorgeschlagen, umfassend ein Hybridmodul und umfassend wenigstens eine erste Bremse eines Getriebes, wobei die erste Bremse ein gehäusefestes erstes Abstützelement und ein durch die erste Bremse bremsbares erstes Drehelement aufweist, wobei das erste Abstützelement mit der Trennwand drehfest verbunden oder einteilig aus der Trennwand ausgeführt ist.

Dadurch kann eine hochintegrierte Getriebeeinheit bereitgestellt werden. Die Getriebeeinheit kann nach erfolgter Produktion eigenständig getestet und überprüft werden und anschließend in dem Antriebsstrang eingebaut werden.

Erfindungsgemäß ist das Hybridmodul zur Übertragung von Drehmoment in einem Antriebsstrang eines Fahrzeugs mit einem Getriebe vorgesehen, wobei das in einem Gehäuse aufgenommene Hybridmodul aufweist einen ersten Elektromotor, eine erste Kupplung, die durch eine erste Kupplungsbetätigungseinheit betätigbar ist und ein erstes Kupplungslamellenpaket, einen ersten Kupplungseingang und einen ersten Kupplungsausgang aufweist, eine an dem Gehäuse befestigte Trennwand, wobei die Trennwand axial zwischen der ersten Kupplung und dem Getriebe angeordnet und lösbar mit dem Gehäuse verbindbar ist.

Dadurch kann ein hochintegriertes Hybridmodul bereitgestellt werden, das kostengünstig aufgebaut und einfach herstellbar ist.

Der erste Elektromotor kann durch Kühlöl gekühlt sein. Der erste Elektromotor und die erste Kupplung können in einem gemeinsamen Fluidraum angeordnet sein. Der erste Elektromotor kann radial außerhalb der ersten Kupplung angeordnet sein. Der erste Elektromotor kann in einer P1-Anordnung wirksam sein.

Ein dem ersten Elektromotor zugeordneter Drehzahlsensor kann an der Trennwand oder einem mit dieser verbundenen Bauteil angeordnet sein. Der Drehzahlsensor kann an dem Gehäuse oder einem mit diesem verbundenen Bauteil angeordnet sein. Der Drehzahlsensor kann von dem ersten Elektromotor aus betrachtet, getriebeseitig oder axial gegenüberliegend angeordnet sein. Der Drehzahlsensor kann auf dem Wirbelstromprinzip, dem Resolverprinzip oder dem Hallprinzip aufbauen.

Ein zweiter Elektromotor kann unabhängig von dem ersten Elektromotor angeordnet sein. Der zweite Elektromotor kann in einer P3-Anordnung wirksam sein.

Die erste Kupplung kann eine Drehmomentübertragung zwischen einem Verbrennungsmotor und/oder dem ersten Elektromotor und dem Getriebe wahlweise unterbrechen oder bewirken

Der erste Kupplungseingang kann mit einer Brennkraftmaschine verbunden sein. Der erste Kupplungseingang kann mit einem Rotor des ersten Elektromotors drehfest, bevorzugt fest, verbunden sein. Der erste Kupplungseingang kann einen Aussenlamellenträger oder einen Innenlamellenträger umfassen.

Der erste Kupplungsausgang kann mit einem zweiten Elektromotor verbunden sein.

Der erste Kupplungsausgang kann mittelbar oder unmittelbar mit einer Getriebeeingangswelle des Getriebes verbindbar sein. Der erste Kupplungsausgang kann einen Aussenlamellenträger oder einen Innenlamellenträger umfassen.

Die Trennwand kann mit dem Gehäuse verschraubt sein. Die Trennwand kann einteilig oder mehrteilig, insbesondere zweiteilig, ausgeführt sein. Die Trennwandteile können miteinander lösbar verbunden, beispielsweise verschraubt sein. Trennwandteile können radial übereinander und/oder axial nebeneinander angeordnet sein. Die Trennwand kann axial mehrschichtig aufgebaut sein.

In einer bevorzugten Ausführung der Erfindung ist das Hybridmodul getriebeseitig durch die Trennwand und axial gegenüberliegend durch das Gehäuse umschlossen. Das Hybridmodul kann durch das Gehäuse fluiddicht aufgenommen sein. Das Hybridmodul kann sich mit dem Getriebe einen gemeinsamen Fluidraum teilen. Die Trennwand kann dabei einen Fluiddurchgang ermöglichen. Auch kann das Hybridmodul und das Getriebe jeweils einen getrennten Fluidraum aufweisen, die voneinander durch die Trennwand getrennt sein können.

In einer besonders bevorzugten Ausführung der Erfindung ist die Trennwand unabhängig von der ersten Kupplung und dem ersten Elektromotor mit dem Gehäuse fest und lösbar verbindbar.

In einer speziellen Ausführung der Erfindung ist die erste Kupplungsbetätigungseinheit an der Trennwand angeordnet.

In einer vorteilhaften Ausführung der Erfindung weist die erste Kupplungsbetätigungseinheit einen ersten Kupplungsbetätigungskolben auf, der in einer ersten Aufnahme verschiebbar aufgenommen ist, wobei die erste Aufnahme als separates Bauteil mit der Trennwand unmittelbar verbunden ist oder einteilig aus der Trennwand ausgebildet ist. Die erste Aufnahme kann mit der Trennwand lösbar verbunden sein, beispielsweise verschraubt sein.

In einer bevorzugten Ausgestaltung der Erfindung ist eine zweite Kupplung angeordnet, die durch eine zweite Kupplungsbetätigungseinheit betätigbar ist und ein zweites Kupplungslamellenpaket, einen zweiten Kupplungseingang und einen zweiten Kupplungsausgang aufweist. Der erste Kupplungsausgang und der zweite Kupplungseingang können drehfest oder fest miteinander verbunden oder einteilig miteinander ausgeführt sein. Die erste und zweite Kupplung können radial geschachtelt angeordnet sein. Der zweite Kupplungseingang kann mit einem zweiten Elektromotor verbunden sein. Der zweite Kupplungsausgang kann mit einer ersten Getriebeeingangswelle des Getriebes verbindbar sein. Der zweite Kupplungseingang kann einen Aussenlamellenträger oder einen Innenlamellenträger umfassen. Der zweite Kupplungsausgang kann einen Aussenlamellenträger oder einen Innenlamellenträger umfassen. Die erste und/oder zweite Kupplung kann durch Kühlöl gekühlt sein. Die erste und/oder zweite Kupplung kann nass oder trocken laufend ausgeführt sein. Das Hybridmodul kann nass oder trocken laufend ausgeführt sein. Die erste und/oder zweite Kupplungsbetätigungseinheit kann als CSC-Betätigung ausgeführt sein. Die erste und/oder zweite Kupplungsbetätigungseinheit kann durch ein Betätigungsfluid durch wenigstens eine hydraulische Drehdurchführung in der Trennwand beaufschlagt werden.

In einer bevorzugten Ausführung der Erfindung ist ein erstes Abstützlager an der Trennwand, insbesondere an einem radial inneren Bereich der Trennwand, angeordnet. Das erste Abstützlager kann eine radiale und/oder axiale Abstützung eines Bauteils der ersten und/oder zweiten Kupplung bewirken. Das erste Abstützlager kann eine Abstützung einer Betätigungskraft der ersten und/oder zweiten Kupplung bewirken. Die Betätigungskraft der ersten und/oder zweiten Kupplung kann über das Abstützlager und die Trennwand abgestützt werden. Dadurch kann ein intern geschlossener Kraftfluss zur Abstützung der Betätigungskraft und eine hohe Steuerbarkeit der ersten und/oder zweiten Kupplung ermöglicht werden.

Das Getriebe kann ein Planetengetriebe sein. Das Getriebe kann ein Dedicated Hybrid Transmission (DHT) sein.

Das erste Abstützelement kann einen Lamellenträger, insbesondere einen Aussenlamellenträger oder einen Innenlamellenträger umfassen. Die erste Bremse kann ein erstes Bremslamellenpaket umfassen, das über eine erste Bremsbetätigungseinheit eine reibschlüssige Verbindung zwischen dem ersten Abstützelement und dem ersten Drehelement bewirken kann. Das erste Drehelement kann einen Aussenlamellenträger oder einen Innenlamellenträger umfassen. Das erste Bremslamellenpaket kann erste Bremsreiblamellen aufweisen. Die ersten Bremsreiblamellen können auf einer und nur auf einer axialen Seite einen Reibbelag aufweisen. Dadurch kann die Hitzebeständigkeit der ersten Bremse erhöht werden. Die erste Bremsbetätigungseinheit kann einen verschiebbaren, insbesondere axial verschiebbaren, ersten Bremsbetätigungskolben aufweisen.

Es kann eine zweite Bremse, umfassend ein gehäusefestes zweites Abstützelement und ein durch die zweite Bremse bremsbares zweites Drehelement angeordnet sein, wobei das zweite Abstützelement mit der Trennwand drehfest verbunden oder einteilig aus der Trennwand ausgeführt sein kann. Das zweite Abstützelement kann einen Lamellenträger, insbesondere einen Aussenlamellenträger oder einen Innenlamellenträger umfassen. Das zweite Drehelement kann einen Lamellenträger, insbesondere einen Aussenlamellenträger oder einen Innenlamellenträger umfassen.

Die erste und zweite Bremse können radial geschachtelt angeordnet sein.

In einer vorteilhaften Ausführung der Erfindung ist die erste Kupplungsbetätigungseinheit an einer der ersten Kupplung zugewandten ersten axialen Seite der Trennwand und die erste Bremsbetätigungseinheit an einer gegenüberliegenden und der ersten Bremse zugewandten zweiten axialen Seite der Trennwand angeordnet.

In einer bevorzugten Ausführung der Erfindung weist die Trennwand Fluidzuführöffnungen auf, durch die die erste Kupplungsbetätigungseinheit und/oder die erste Bremsbetätigungseinheit mit Fluid zur Bereitstellung eines Betätigungsdrucks versorgt werden kann. Dadurch kann eine integrierte und bauraumsparende Fluidversorgung ermöglicht werden.

Weitere Vorteile und vorteilhafte Ausgestaltungen der Erfindung ergeben sich aus der Figurenbeschreibung und der Abbildung.

### Figurenbeschreibung

Die Erfindung wird im Folgenden unter Bezugnahme auf die Abbildung ausführlich beschrieben. Es zeigt:

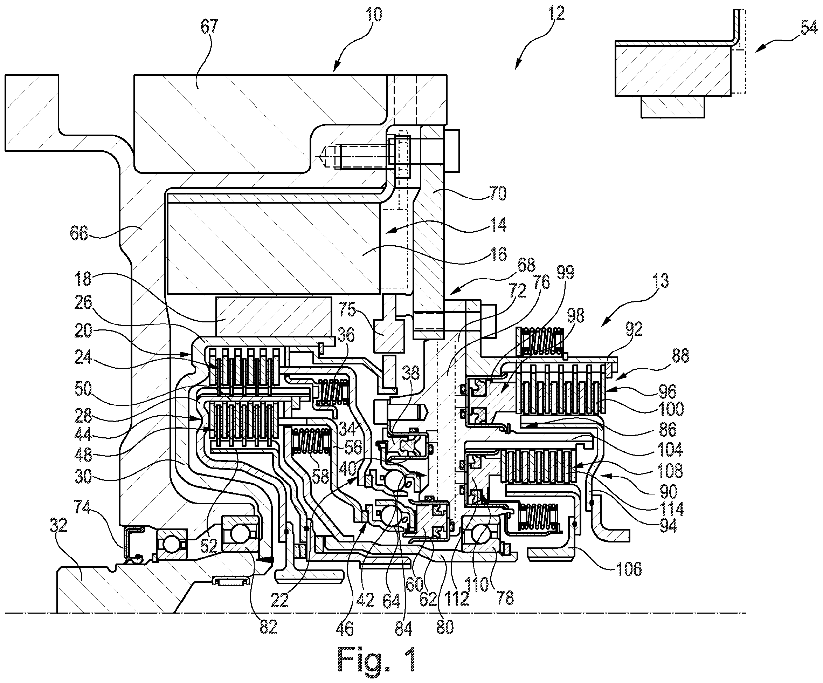

- Figur 1:: Einen Halbschnitt durch ein Hybridmodul in einer Getriebeeinheit in einer speziellen Ausführungsform der Erfindung.

Figur 1 zeigt einen Halbschnitt durch ein Hybridmodul 10 in einer Getriebeeinheit 12 in einer speziellen Ausführungsform der Erfindung. Das Hybridmodul 10 ist in einem Antriebsstrang eines Fahrzeugs eingesetzt und bewirkt eine Drehmomentübertragung zu einem nachgeschalteten Getriebe 13.

Das Hybridmodul 10 weist einen ersten Elektromotor 14 mit einem Stator 16 und einem Rotor 18 auf. Der Rotor 18 ist radial außerhalb von einer ersten Kupplung 20, die durch eine erste Kupplungsbetätigungseinheit 22 betätigbar ist und ein erstes Kupplungslamellenpaket 24, einen ersten Kupplungseingang 26 und einen ersten Kupplungsausgang 28 aufweist, angeordnet. Der erste Kupplungseingang 26 und der erste Kupplungsausgang 28 sind bei betätigter erster Kupplung 20 miteinander über das erste Kupplungslamellenpaket 24 verbunden. Bei geöffneter erster Kupplung 20 ist die Drehmomentübertragung zwischen dem ersten Kupplungseingang 26 und dem ersten Kupplungsausgang 28 unterbrochen.

Der erste Elektromotor 14 ist in einer P1-Anordnung wirksam und der erste Kupplungseingang 26 ist mit dem Rotor 18 fest verbunden. Weiterhin ist der erste Kupplungseingang 26 über einen radial sich erstreckenden Abschnitt 30 mit einer Antriebswelle 32, die mit einer Kurbelwelle einer Brennkraftmaschine gekoppelt ist, verbunden, wodurch an dem ersten Kupplungseingang 26 sowohl das von der Brennkraftmaschine ausgegebene Drehmoment als auch das von dem ersten Elektromotor 14 bereitgestellte Drehmoment anliegen kann.

Die erste Kupplung 20 wird durch die erste Kupplungsbetätigungseinheit 22 betätigt. Die erste Kupplungsbetätigungseinheit 22 umfasst einen ersten Drucktopf 34, der eine Betätigungskraft auf die erste Kupplung 20 einleiten kann. Der erste Drucktopf 34 wird dabei entgegen einer Rückstellkraft einer ersten Rückstellfeder 36 bewegt. Die erste Kupplungsbetätigungseinheit 22 umfasst eine CSC-Betätigung und dabei einen ersten Kupplungsbetätigungskolben 38, der in einer ersten Aufnahme 40 verschiebbar aufgenommen ist und die Betätigungskraft über ein erstes Betätigungslager 42 auf den ersten Drucktopf 34 überträgt.

Eine zweite Kupplung 44 ist mit der ersten Kupplung 20 radial geschachtelt angeordnet. Die zweite Kupplung 44 ist durch eine zweite Kupplungsbetätigungseinheit 46 betätigbar und umfasst ein zweites Kupplungslamellenpaket 48, einen zweiten Kupplungseingang 50 und einen zweiten Kupplungsausgang 52. Der zweite Kupplungseingang 50 und der zweite Kupplungsausgang 52 sind bei betätigter zweiter Kupplung 44 miteinander über das zweite Kupplungslamellenpaket 48 verbunden. Bei geöffneter zweiter Kupplung 44 ist die Drehmomentübertragung zwischen dem zweiten Kupplungseingang 50 und dem zweiten Kupplungsausgang 52 unterbrochen.

Der erste Kupplungsausgang 28 und der zweite Kupplungseingang 50 sind einteilig miteinander ausgeführt. Der zweite Kupplungseingang 50 und damit auch der erste Kupplungsausgang 28 sind mit einem zweiten Elektromotor 54 verbunden. Der zweite Elektromotor 54 kann in einer P3-Anordnung wirksam sein und dabei dem Getriebe 13 zugeordnet sein. Der zweite Elektromotor 54 kann beispielsweise in dem Getriebe 13 angeordnet sein.

Der zweite Kupplungsausgang 52 ist mit einer ersten Getriebeeingangswelle des Getriebes 13 verbindbar. Das Getriebe 13 kann ein Dedicated Hybrid Transmission (DHT) mit einem Planetengetriebe sein. Bei geschlossener erster Kupplung 20 und zweiter Kupplung 44 kann eine Drehmomentübertragung zwischen der Brennkraftmaschine und/oder dem ersten Elektromotor 14 und der ersten Getriebeeingangswelle erfolgen. Bei geöffneter erster Kupplung 20 und geschlossener zweiter Kupplung 44 wird eine Drehmomentübertragung zwischen dem zweiten Elektromotor 54 und der ersten Getriebeeingangswelle bewirkt. Die Anbindung des zweiten Elektromotors 54 mit dem zweiten Kupplungseingang 50 erfolgt über eine mit dem ersten Kupplungseingang 50 verbindbare zweite Getriebeeingangswelle. Die zweite Getriebeeingangswelle kann als Vollwelle und die erste Getriebeeingangswelle kann als die Vollwelle radial umgebende Hohlwelle ausgeführt sein.

Die zweite Kupplung 44 wird durch die zweite Kupplungsbetätigungseinheit 46 betätigt. Die zweite Kupplungsbetätigungseinheit 46 umfasst einen zweiten Drucktopf 56, der eine Betätigungskraft auf die zweite Kupplung 44 einleiten kann. Der zweite Drucktopf 56 wird dabei entgegen einer Rückstellkraft einer zweiten Rückstellfeder 58 bewegt. Die zweite Kupplungsbetätigungseinheit 46 umfasst eine CSC-Betätigung und dabei einen zweiten Kupplungsbetätigungskolben 60, der in einer zweiten Aufnahme 62 verschiebbar aufgenommen ist und die Betätigungskraft über ein zweites Betätigungslager 64 auf den zweiten Drucktopf 56 überträgt.

Das Hybridmodul 10 ist in einem Gehäuse 66 aufgenommen. An einem Aussenumfang ist eine Leistungselektronik 67, insbesondere zur Ansteuerung des ersten Elektromotors 14 angeordnet. Der Stator 16 ist mit dem Gehäuse 66 verschraubt. An dem Gehäuse 66 ist eine Trennwand 68 befestigt. Die Trennwand 68 ist axial zwischen der ersten und zweiten Kupplung 20, 44 und dem Getriebe 13 angeordnet und lösbar mit dem Gehäuse 66 verbunden. Die Trennwand 68 ist unabhängig von der ersten Kupplung 20, der zweiten Kupplung 44 und dem ersten Elektromotor 14 mit dem Gehäuse 66 fest und lösbar verbunden. Die Trennwand 68 ist zweiteilig ausgeführt und ein erstes Trennwandteil 70 ist mit dem Gehäuse 66 verschraubt. An dem ersten Trennwandteil 70 ist ein zweites Trennwandteil 72 angeschraubt. An dem ersten Trennwandteil 70 ist ein Rotorlagesensor 75 angeordnet.

Das Hybridmodul 10 ist getriebeseitig durch die Trennwand 68 und axial gegenüberliegend durch das Gehäuse 66 umschlossen. Zwischen dem Gehäuse 66 und der Antriebswelle 32 ist ein Wellendichtring 74 angeordnet, der einen durch das Hybridmodul 10 eingenommenen Fluidraum abdichtet. Die erste und zweite Kupplung 20, 44 ist nass laufend ausgeführt und kann durch Kühlöl gekühlt sein. Das Kühlöl kann dabei auch den radial außerhalb der ersten und zweiten Kupplung 20, 44 angeordneten ersten Elektromotor 14 kühlen. Das Hybridmodul 10 teilt sich mit dem Getriebe 13 einen gemeinsamen Fluidraum. Die Trennwand 68 kann dabei einen Fluiddurchgang ermöglichen.

Die erste Kupplungsbetätigungseinheit 22 und die zweite Kupplungsbetätigungseinheit 46 sind radial geschachtelt und jeweils an der Trennwand 68 angeordnet. Die erste Aufnahme 40 und die zweite Aufnahme 62 sind jeweils als separates Bauteil mit der Trennwand 68 verbunden. Die Trennwand 68, hier der zweite Trennwandteil 72, weist Fluidzuführöffnungen 76 auf, durch die die erste Kupplungsbetätigungseinheit 22 und die zweite Kupplungsbetätigungseinheit 46 mit Fluid zur Bereitstellung eines Betätigungsdrucks versorgt werden kann.

Ein erstes Abstützlager 78 ist in einem radial inneren Bereich der Trennwand 68 angeordnet und ermöglicht eine Abstützung des zweiten Kupplungseingangs 50 über ein Abstützblech 80 an der Trennwand 68. Dabei kann sowohl eine radiale und axiale Zentrierung des zweiten Kupplungseingangs 50 als auch eine Abstützung der auf die zweite Kupplung 44 einwirkenden Betätigungskraft an der Trennwand 68 bewirkt werden. Der Kraftfluss zur Abstützung der Betätigungskraft der zweiten Kupplung 44 kann somit über kurze Wege und in dem Hybridmodul 10 geschlossen erfolgen. Eine Abstützung der Betätigungskraft der ersten Kupplung 20 erfolgt über den ersten Kupplungseingang 26 über ein zweites Abstützlager 82 an dem Gehäuse 66. Der Kraftfluss wird dabei über das Gehäuse 66 auf die Trennwand 68 geleitet und darüber geschlossen.

Die erste und zweite Kupplungsbetätigungseinheit 22, 46 sind an einer der ersten und zweiten Kupplung 20, 44 zugewandten ersten axialen Seite 84 der Trennwand 68 angeordnet. An einer der ersten axialen Seite 84 gegenüberliegenden zweiten axialen Seite 86 der Trennwand 68 ist eine erste Bremse 88 und eine radial geschachtelt zu dieser angeordnete zweite Bremse 90 angeordnet. Die erste und zweite Bremse 88, 90 sind in dem Getriebe 13 wirksam. Das Getriebe 13 umfasst einen Planetensatz, dessen einzelne Getriebestufen durch die erste und zweite Bremse 88, 90 festgelegt und die Getriebeübersetzungen folglich gewählt werden können.

Die erste Bremse 88 umfasst ein gehäusefestes erstes Abstützelement 92, insbesondere einen Aussenlamellenträger und ein durch die erste Bremse 88 bremsbares erstes Drehelement 94, insbesondere einen Innenlamellenträger, wobei das erste Abstützelement 92 mit der Trennwand 68 drehfest verbunden, insbesondere lösbar verschraubt ist. Die erste Bremse 88 umfasst ein erstes Bremslamellenpaket 96, das über eine erste Bremsbetätigungseinheit 98, die einen verschiebbaren, insbesondere axial verschiebbaren, ersten Bremsbetätigungskolben 99 aufweist, eine reibschlüssige Verbindung zwischen dem ersten Abstützelement 92 und dem ersten Drehelement 94 bewirken kann. Das erste Bremslamellenpaket 96 kann erste Bremsreiblamellen 100 aufweisen, die auf einer und nur auf einer axialen Seite einen Reibbelag aufweisen können. Die erste Bremsbetätigungseinheit 98 ist unmittelbar an der zweiten axialen Seite 86 der Trennwand 68 angeordnet.

Die zweite Bremse 90 umfasst ein gehäusefestes zweites Abstützelement 104, insbesondere einen Aussenlamellenträger und ein durch die zweite Bremse 90 bremsbares zweites Drehelement 106, insbesondere einen Innenlamellenträger. Das zweite Drehelement 106 ist beispielsweise mit einem Sonnenrad des Planetengetriebes verbunden. Das zweite Abstützelement 104 ist einteilig aus der Trennwand 68 ausgeführt. Die zweite Bremse 90 umfasst ein zweites Bremslamellenpaket 108, das über eine unmittelbar an der zweiten axialen Seite 86 der Trennwand 68 angeordnete zweite Bremsbetätigungseinheit 110, die einen verschiebbaren, insbesondere axial verschiebbaren, zweiten Bremsbetätigungskolben 112 aufweist, eine reibschlüssige Verbindung zwischen dem zweiten Abstützelement 104 und dem zweiten Drehelement 106 bewirken kann. Das zweite Bremslamellenpaket 108 kann zweite Bremsreiblamellen 114 aufweisen, die auf einer und nur auf einer axialen Seite einen Reibbelag aufweisen können.

Die Trennwand 68 weist weitere Fluidzuführöffnungen auf, durch die die erste Bremsbetätigungseinheit 98 und die zweite Bremsbetätigungseinheit 110 mit Fluid zur Bereitstellung eines Betätigungsdrucks versorgt werden können.

### Bezugszeichenliste

- 10: Hybridmodul
- 12: Getriebeeinheit
- 13: Getriebe
- 14: erster Elektromotor
- 16: Stator
- 18: Rotor
- 20: erste Kupplung
- 22: erste Betätigungseinheit
- 24: erstes Kupplungslamellenpaket
- 26: erster Kupplungseingang
- 28: erster Kupplungsausgang
- 30: Abschnitt
- 32: Antriebswelle
- 34: erster Drucktopf
- 36: erste Rückstellfeder
- 38: erster Kupplungsbetätigungskolben
- 40: erste Aufnahme
- 42: erstes Betätigungslager
- 44: zweite Kupplung
- 46: zweite Kupplungsbetätigungseinheit
- 48: zweites Kupplungslamellenpaket
- 50: zweiter Kupplungseingang
- 52: zweiter Kupplungsausgang
- 54: zweiter Elektromotor
- 56: zweiter Drucktopf
- 58: zweite Rückstellfeder
- 60: zweiter Kupplungsbetätigungskolben
- 62: zweite Aufnahme
- 64: zweites Betätigungslager
- 66: Gehäuse
- 67: Leistungselektronik
- 68: Trennwand
- 70: erster Trennwandteil
- 72: zweiter Trennwandteil
- 74: Wellendichtring
- 75: Rotorlagesensor
- 76: Fluidzuführöffnung
- 78: erstes Abstützlager
- 80: Abstützblech
- 82: zweites Abstützlager
- 84: erste axiale Seite
- 86: zweite axiale Seite
- 88: erste Bremse
- 90: zweite Bremse
- 92: erstes Abstützelement
- 94: erstes Drehelement
- 96: erstes Bremslamellenpaket
- 98: erste Bremsbetätigungseinheit
- 99: erster Bremsbetätigungskolben
- 100: erste Bremsreiblamellen
- 104: zweites Abstützelement
- 106: zweites Drehelement
- 108: zweites Bremslamellenpaket
- 110: zweite Bremsbetätigungseinheit
- 112: zweiter Bremsbetätigungskolben
- 114: zweite Bremsreiblamellen

## Patentansprüche

1. Getriebeeinheit (12) in einem Antriebsstrang eines Fahrzeugs, umfassend ein Hybridmodul (10) zur Übertragung von Drehmoment in einem Antriebsstrang eines Fahrzeugs mit einem Getriebe (13) und wenigstens eine erste Bremse (88) eines Getriebes (13),
wobei das in einem Gehäuse (66) aufgenommene Hybridmodul aufweist einen ersten Elektromotor (14),
eine erste Kupplung (20), die durch eine erste Kupplungsbetätigungseinheit (22) betätigbar ist und ein erstes Kupplungslamellenpaket (24), einen ersten Kupplungseingang (26) und einen ersten Kupplungsausgang (28) aufweist, eine an dem Gehäuse (66) befestigte Trennwand (68), wobei
die Trennwand (68) axial zwischen der ersten Kupplung (20) und dem Getriebe (13) angeordnet und lösbar mit dem Gehäuse (66) verbindbar ist, **dadurch gekennzeichnet, dass**
die erste Bremse (88) ein gehäusefestes erstes Abstützelement (92) und ein durch die erste Bremse bremsbares erstes Drehelement (94) aufweist, wobei das erste Abstützelement (92) mit der Trennwand (68) drehfest verbunden oder einteilig aus der Trennwand (68) ausgeführt ist.

2. Getriebeeinheit (12) nach Anspruch 1, **dadurch gekennzeichnet, dass** das Hybridmodul (10) getriebeseitig durch die Trennwand (68) und axial gegenüberliegend durch das Gehäuse (66) umschlossen ist.

3. Getriebeeinheit (12) nach Anspruch 1 oder 2, **dadurch gekennzeichnet, dass** die Trennwand (68) unabhängig von der ersten Kupplung (20) und dem ersten Elektromotor (16) mit dem Gehäuse (66) fest und lösbar verbindbar ist.

4. Getriebeeinheit (12) nach einem der vorangehenden Ansprüche, **dadurch gekennzeichnet, dass** die erste Kupplungsbetätigungseinheit (22) an der Trennwand angeordnet ist.

5. Getriebeeinheit (12) nach einem der vorangehenden Ansprüche, **dadurch gekennzeichnet, dass** die erste Kupplungsbetätigungseinheit (22) einen ersten Kupplungsbetätigungskolben (38) aufweist, der in einer ersten Aufnahme (40) verschiebbar aufgenommen ist, wobei die erste Aufnahme (40) als separates Bauteil mit der Trennwand (68) verbunden ist oder einteilig aus der Trennwand (68) ausgebildet ist.

6. Getriebeeinheit (12) nach einem der vorangehenden Ansprüche, **dadurch gekennzeichnet, dass** eine zweite Kupplung (44) angeordnet ist, die durch eine zweite Kupplungsbetätigungseinheit (46) betätigbar ist und ein zweites Kupplungslamellenpaket (48), einen zweiten Kupplungseingang (50) und einen zweiten Kupplungsausgang (52) aufweist.

7. Getriebeeinheit (12)nach einem der vorangehenden Ansprüche, **dadurch gekennzeichnet, dass** ein erstes Abstützlager (78) an der Trennwand (68), insbesondere an einem radial inneren Bereich der Trennwand (68), angeordnet ist.

8. Getriebeeinheit (12) nach Anspruch 1, **dadurch gekennzeichnet, dass** die erste Kupplungsbetätigungseinheit (22) an einer der ersten Kupplung (20) zugewandten ersten axialen Seite (84) der Trennwand (68) und die erste Bremsbetätigungseinheit (98) an einer gegenüberliegenden und der ersten Bremse (88) zugewandten zweiten axialen Seite (86) der Trennwand (68) angeordnet ist.

9. Getriebeeinheit (12) nach Anspruch 1 oder 8, **dadurch gekennzeichnet, dass** das die Trennwand (68) Fluidzuführöffnungen (76) aufweist, durch die die erste Kupplungsbetätigungseinheit (22) und/oder die erste Bremsbetätigungseinheit (98) mit Fluid zur Bereitstellung eines Betätigungsdrucks versorgt werden kann.

## Claims

1. A transmission unit (12) in a drive train of a vehicle, comprising a hybrid module (10) for transmitting torque in a drive train of a vehicle having a transmission (13), and at least one first brake (88) of a transmission (13),
wherein the hybrid module received in a housing (66) has a first electric motor (14),
a first clutch (20), which can be actuated by a first clutch actuating unit (22) and has a first clutch disc assembly (24), a first clutch input (26) and a first clutch output (28), and a bulkhead (68) fastened to the housing (66), wherein the bulkhead (68) is arranged axially between the first clutch (20) and the transmission (13) and can be releasably connected to the housing (66), **characterised in that**
the first brake (88) has a first support element (92) secured to the housing and a first rotating element (94) that can be braked by the first brake, wherein the first support element (92) is non-rotatably connected to the bulkhead (68) or is constructed in one piece with the bulkhead (68).

2. The transmission unit (12) according to claim 1, **characterised in that** the hybrid module (10) is enclosed on the transition side by the bulkhead (68) and axially opposite by the housing (66).

3. The transmission unit (12) according to claim 1 or 2, **characterised in that** the bulkhead (68) can be firmly and releasably connected to the housing (66) independently of the first clutch (20) and the first electric motor (16).

4. The transmission unit (12) according to one of the preceding claims, **characterised in that** the first clutch actuating unit (22) is arranged on the bulkhead.

5. The transmission unit (12) according to one of the preceding claims, **characterised in that** the first clutch actuating unit (22) has a first clutch actuating piston (38), which is slidably received in a first receptacle (40), wherein the first receptacle (40) is connected to the bulkhead (68) as a separate component or is formed in one piece with the bulkhead (68).

6. The transmission unit (12) according to one of the preceding claims, **characterised in that** a second clutch (44) is arranged, which can be actuated by a second clutch actuating unit (46) and has a second clutch disc assembly (48), a second clutch input (50) and a second clutch output (52).

7. The transmission unit (12) according to one of the preceding claims, **characterised in that** a first support bearing (78) is provided on the bulkhead (68), in particular in a radial inner region of the bulkhead (68).

8. The transmission unit (12) according to claim 1, **characterised in that** the first clutch actuating unit (22) is provided on a first axial side (84) of the bulkhead (68) facing the first clutch (20) and the first brake actuating unit (98) is arranged on an opposite second axial side (86) of the bulkhead (68) facing the first brake (88).

9. The transmission unit (12) according to claim 1 or 8, **characterised in that** the bulkhead (68) has fluid supply openings (76), through which the first clutch actuating unit (22) and/or the first brake actuating unit (98) can be supplied with fluid to provide an actuating pressure.

## Revendications

1. Unité de transmission (12) dans une chaîne cinématique d'un véhicule, comprenant un module hybride (10) pour la transmission d'un couple dans une chaîne cinématique d'un véhicule comprenant une transmission (13) et au moins un premier frein (88) d'une transmission (13),
dans laquelle le module hybride logé dans un boîtier (66) présente un premier moteur électrique (14),
un premier embrayage (20), qui peut être actionné par une première unité d'actionnement d'embrayage (22) et présente un premier bloc de disques d'embrayage (24), une première entrée d'embrayage (26) et une première sortie d'embrayage (28), une paroi de séparation (68) fixée au boîtier (66), la paroi de séparation (68) étant disposée axialement entre le premier embrayage (20) et la transmission (13) et peut être reliée amovible au boîtier (66) **caractérisée en ce que**
le premier frein (88) présente un premier élément d'appui (92) solidaire du boîtier et un premier élément de rotation (94) pouvant être freiné par le premier frein, le premier élément d'appui (92) étant relié solidaire en rotation à la paroi de séparation (68) ou étant conçu d'un seul tenant avec la paroi de séparation (68).

2. Unité de transmission (12) selon la revendication 1, **caractérisée en ce que** le module hybride (10) est entouré côté transmission par la paroi de séparation (68) et à l'opposé dans le sens axial par le boîtier (66).

3. Unité de transmission (12) selon la revendication 1 ou 2, **caractérisée en ce que** la paroi de séparation (68) peut être solidarisable de manière amovible indépendamment du premier embrayage (20) et du premier moteur électrique (16) avec le boîtier (66).

4. Unité de transmission (12) selon l'une quelconque des revendications précédentes, **caractérisée en ce que** la première unité d'actionnement d'embrayage (22) est disposée sur la paroi de séparation.

5. Unité de transmission (12) selon l'une quelconque des revendications précédentes, **caractérisée en ce que** la première unité d'actionnement d'embrayage (22) présente un premier piston d'actionnement d'embrayage (38), qui est logé mobile dans un premier logement (40), le premier logement (40) étant reliée en tant que élément séparé à la paroi de séparation (68) ou étant conçue d'un seul tenant avec la paroi de séparation (68).

6. Unité de transmission (12) selon l'une quelconque des revendications précédentes, **caractérisée en ce qu'**un second embrayage (44) est disposé, lequel peut être actionné par une seconde unité d'actionnement d'embrayage (46) et présente un second bloc de disques d'embrayage (48), une seconde entrée d'embrayage (50) et une seconde sortie d'embrayage (52).

7. Unité de transmission (12) selon l'une quelconque des revendications précédentes, **caractérisée en ce qu'**un premier support d'appui (78) est disposé sur la paroi de séparation (68), en particulier sur une zone radialement interne de la paroi de séparation (68).

8. Unité de transmission (12) selon la revendication 1, **caractérisée en ce que** la première unité d'actionnement d'embrayage (22) est disposée sur un premier côté axial (84) de la paroi de séparation (68) orienté vers le premier embrayage (20) et la première unité d'actionnement de frein (98) est disposée sur un second côté axial (86) de la paroi de séparation (68) opposé et orienté vers le premier frein (88).

9. Unité de transmission (12) selon la revendication 1 ou 8, **caractérisée en ce que** la paroi de séparation (68) présente des ouvertures d'acheminement de fluide (76), à travers lesquelles la première unité d'actionnement d'embrayage (22) et/ou la première unité d'actionnement de frein (98) peuvent être alimentées en fluide pour fournir une pression d'actionnement.
